# EUROPEAN PATENT APPLICATION

(11) **EP 2 679 306 A1**
(43) Date of publication of application: **01.01.2014**
(21) Application number: 12174436.1
(22) Date of filing: 29.06.2012
(51) Int. Cl.: B01J 37/08, B01J 37/04, B01J 29/06, B01J 29/064, B01J 29/068, B01J 29/072, B01J 29/076, B01J 29/46, B01J 37/00, B01D 53/86, B01J 29/72, B01J 29/74, B01J 29/76, B01J 29/78, B01J 29/42, B01J 29/44, B01J 29/48, B01J 29/10

(54) **Method for producing metal-doped zeolites**

(71) Applicant: Süd-Chemie AG, 80333 München (DE)
(72) Inventor: Van der Walt, Johan, Richards Bay, South Africa 3900 (ZA); Tissler, Arno, 93105 Tegenheim (DE); Machl, matthias, 83703 Gmund (DE)
(74) Representative: Stolmár & Partner

(57) **Abstract**

The present invention refers to a method of producing a metal-doped zeolite, wherein a mixture of zeolite and a metal precursor compound is reacted in a moving bed reactor. The present invention further refers to the metal-doped zeolite obtainable by the method according to the invention and its use for the conversion of nitrogen-containing compounds to nitrogen.

## Description

The present invention relates to a method of producing metal-doped zeolites, the metal-doped zeolites obtained by the method of the present invention and the use of the metal-doped zeolite according to the invention for the conversion of nitrogen-containing compounds to nitrogen.

Metal-doped zeolites and their use in the catalytic conversion of nitrogen-containing compounds present in waste gases are known in the state of the art. In such catalysts the metal-doped zeolites are either used in the form of extrudates or honeycombs, or as constituents of coatings on catalyst structures. Such metal-doped zeolites are usually doped with at least one metal as catalytically active component. The catalytically active metal is usually a transition or noble metal, such as copper, cobalt, palladium, rhodium, iridium, ruthenium, iron, nickel and vanadium.

Several methods of producing metal-doped zeolites are known in the state of the art, for instance ion exchange in aqueous solution or ion exchange by solid-state synthesis. Until now all this methods still have some disadvantages and there is a continuous need to develop more economic production methods with an easy operation handling and which are time- and cost-saving. Furthermore, there is also a continuous need to increase the performance of the metal-doped zeolites with regard to their long-time stability and catalytic activity during the conversion of nitrogen-containing compounds to nitrogen.

Aqueous ion exchange methods have the disadvantage that introduced metals having different stable oxidation states may be further oxidized to a thermodynamically more stable species which is no longer catalytically active.

Metal-doped zeolites produced by solid-state ion exchange methods known in the state of the art further provides the drawback that their reactivity for the conversion of nitrogen-containing compounds to nitrogen is mostly very low at temperatures of less than 377°C, in particular if cobalt, copper or iron is used as the metal doping. Since the catalytic conversion conditions of, for instance, nitrogen oxides in waste gases from industrial processes, in exhaust gases and in fluidized bed firing are normally lower than 377°C, the capabilities of such produced metal-doped zeolites are very low.

A further disadvantage of the previously known metal-doped zeolites as catalysts for the conversion of nitrogen-containing compounds to nitrogen in waste gases is their reduced long-time stability due to the poisoning of the catalyst by the steam- and sulphur dioxide-containing environment in such waste gases. These conditions are usually summarized as "hydrothermal conditions".

A further disadvantage of the methods known from the state of the art is that the resulting metal-doped zeolites provide a non-uniform metal doping, or the zeolite lattice is damaged due to high calcination temperatures in the presence of reactive atmospheres such as NH₃ and HCl during the production.

US 2010/0075834 A1 discloses a method that allows the uniform doping of zeolites with catalytically active metals in that a mixture of FeSO_{4*}7 H₂O is intimately ground with a zeolite in a ball mill and subsequently placed in a deep bed reactor wherein the powder mixture which is embedded in a reactor bed has a thickness of from 10 to 20 cm. Although the method in US 2010/0075834 A1 leads to metal-doped zeolites that are uniformly doped, their catalytic activity during the conversion of nitrogen-containing compounds to nitrogen is not very high. Furthermore, the use of a deep bed reactor is not very practicable from the way of handling since during feeding and discharging the reactor the method of producing cannot be continued. Furthermore, in such a deep bed reactor the powder mixture first has to be placed in the reactor, then the reactor has to be heated to the reaction temperature which is maintained until the reaction is completed and subsequently the product has to be cooled before being discharged from the reactor. Such a method is therefore not very economic, allows no easy handling and is time- and cost-consuming.

It was therefore an object of the present invention to provide a method of producing a metal-doped zeolite which is more economic and time- and cost-saving compared to the methods known in the state of the art and which allows an easier handling during operation. Moreover, it was an object of the present invention to provide a method which enables the production of a metal-doped zeolite having an increased catalytic activity during the conversion of nitrogen-containing compounds to nitrogen.

The object of the present invention is solved by a method of producing a metal-doped zeolite, wherein a mixture comprising a zeolite and a metal precursor compound is reacted in a moving bed reactor. The moving bed reactor comprises a feed opening, a heating zone, a reaction zone and a discharge opening.

A moving bed reactor is characterized in that a reaction mixture fed through the feed opening may be continuously transported from the feed opening to the heating zone, subsequently to the reaction zone and the obtained product in the reaction zone is then transported to the discharge opening where it is discharged from the moving bed reactor. It is preferred that the feed opening is at the one end of the moving bed reactor and the discharge opening is at the other end of the moving bed reactor. This has the advantage that a chemical reaction can be arranged continuously by means of a moving bed reactor and no time consuming heating and cooling of the whole reactor has to be performed at the beginning and at the end of the synthesis as is for example in a deep bed reactor.

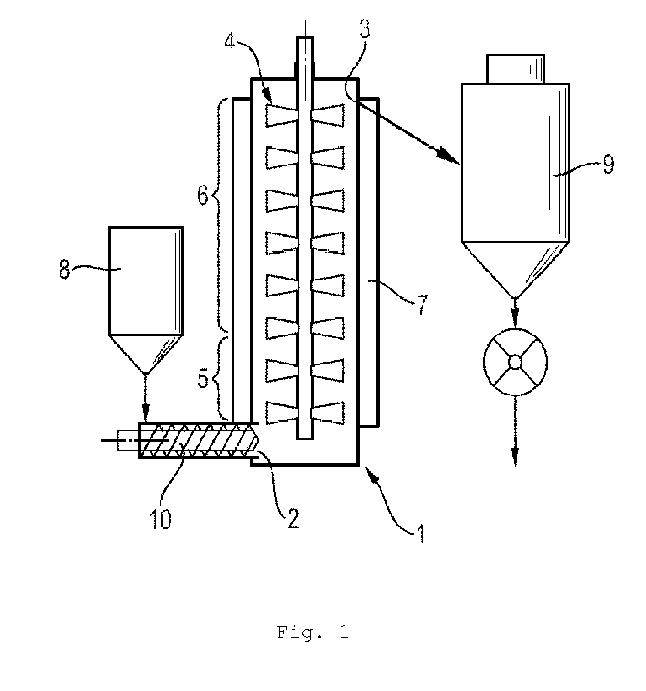

It is further preferred that the moving bed reactor during its use is in a vertical position (also called "vertical reactor"), wherein the feed opening is at the lower end of the moving bed reactor and the discharge opening is at the upper end of the moving bed reactor. Between the two openings are the so-called heating zone and the so-called reaction zone. The heating zone is preferably in direct neighborhood to the feed opening and shades into the reaction zone which ends with the discharge opening. Vertical moving bed reactors preferably have a vertical cylindrical form preferably with a diameter in the range of from 5 to 200 cm and a height in the range of from 50 to 500 cm. Moving bed reactors usable in the method according to the present invention are shown in Figure 1.

The transportation of the reaction mixture through the heating zone and the reaction zone to the discharge opening is preferably performed by an agitator means. The agitator means may be any means which enables the physical transportation of a solid powder or solid particles from the feed opening through the different zones to the discharge opening. The agitator means is preferably a paddle agitator. The rotation axis of the paddle agitator preferably extends along the major axis of the vertical reactor, that is, from the zone comprising the feed opening to the zone comprising the discharge opening.

The mixture comprising the zeolite and the metal precursor compound is preferably grinded or intimately mixed before being fed to the reactor through the feed opening. The grinding or mixing may be done by any grinding or mixing means known in the state of the art. Preferably the grinding means may be a ball mill or a screw conveyor. In case the grinding or mixing means is a screw conveyor it is preferably positioned directly on the outer side of the feed opening of the moving bed reactor. In other words, a reaction mixture conveyed through the screw conveyor is directly introduced from this end of the screw conveyor into the feed opening of the moving bed reactor. That is, the mixture of zeolite and the metal precursor compound is preferably grinded or intimately mixed prior to being fed through the feed opening into the moving bed reactor. The grinding or mixing of the mixture of zeolite and metal precursor compound is applied as long that the average particle size of the mixture lies in the range of from 0.1 to 100 µm.

As mentioned above, the mixture of zeolite and metal precursor compound is fed to the moving bed reactor through the feed opening preferably after being grinded or intimately mixed.

The mixture is then preferably transported from the feed opening to the heating zone. In the heating zone the mixture is preferably heated to a temperature in the range of from 300°C to 800°C, more preferred from 400 to 700°C and even more preferred from 480 to 580°C.

After being heated to the above-mentioned temperature in the heating zone the mixture of zeolite and metal precursor is transported from the heating zone to the reaction zone where the reaction of zeolite and metal precursor compound to the metal-doped zeolite occurs. The temperature in the reaction zone is preferably in the range of from 300° to 800°C, more preferred 400 to 700°C and even more preferred 480 to 580°C. The retention time of the mixture in the reaction zone is preferably in the range of from 50 minutes to 8 hours, more preferred of from 1 hour to 6 hours and even more preferred from 2 hours to 5 hours. In the method according to the invention the retention time should not be below the above lower limit since the reaction is then not completed and the activity of the resulting metal-doped zeolite in the conversion of nitrogen-containing compounds to nitrogen is low. Is the upper limit of the retention time of the mixture in the reaction zone exceeded the uniformity of the distribution of the metal doping in the metal-doped zeolite is adversely effected and the zeolite lattice can be damaged. The same is true when going beyond the lower limit of the temperature in the reaction zone and exceeding the upper limit of the temperature in the reaction zone.

The moving bed reactor is preferably heated by a heating means. The heating means is preferably positioned on the outer walls of the reactor and is covering the walls so that the heat is introduced into the reactor through the walls of the reactor. It is preferred that the heating means is an electric heating as known in the state of the art in the field of reactors.

After the mixture has been reacted to the metal-doped zeolite in the reaction zone the metal-doped zeolite is transported to the discharge opening and is discharged from the moving bed reactor.

As already mentioned above it is preferred in the method of the present invention that the metal-doped zeolite is produced in a continuous flow. In other words the method by means of the moving bed reactor is a continuous process, wherein the mixture of zeolite and metal precursor compound are continuously added and the obtained product, namely the metal-doped zeolite, is continuously removed at a rate that holds the reaction volume under the overflow level. The feeding rate of adding the mixture of the zeolite in the metal precursor into the moving bed reactor lies preferably in the range of 0.5 to 500 kg/h, more preferably in the range of from 1 to 50 kg/h and most preferably about 2 kg/h, with respect to the weight of the entire mixture.

The total retention time of the mixture and the metal-doped zeolite, respectively, in the moving bed reactor is in the range of from 1 hour to 36 hours, more preferably 2 hours to 20 hours and most preferably between 2 hours and 10 hours. The term "total retention time" refers to the total time the reactants and the produced product remains in the reactor from being fed through the feed opening and discharged from the discharge opening.

It is furthermore preferred that the reaction of the zeolite and the metal precursor in the moving bed reactor is carried out in the absence of oxygen. This may in particular be of importance when metal-doped zeolites are prepared wherein the metal used may have different oxidation states and a lower oxidation state of the metal is wished to be maintained, such as for example iron in the oxidation state Fe²⁺. In order to avoid the presence of oxygen the moving bed reactor is preferably continuously fed with an oxygen-free reaction gas, such as for instance inert gases or NH₃. It is further preferred that the oxygen-free reaction gase diffuses through the mixture of zeolite and metal precursor in an opposite direction to the operation direction in the reactor. The reaction gas is preferably continuously passed through the moving bed reactor. The reaction gases are preferably vented from the top of the vertical reactor, that is, they pass through from the end of the moving bed reactor where the discharge opening is located to the end of the moving bed reactor where the feed opening is located. It is furthermore preferred that the reaction gases are recycled and reused in the method according to the invention in order to save material and costs.

The zeolite used in the mixture of a zeolite in the metal precursor compound may be any zeolite known in the art. Zeolites are defined in accordance with the International Mineralogical Association (D. S. Coombs et al, Canadian Mineralogist, 35, 1979, 1571) and are crystalline substances from the group of aluminum silicates with a spatial network structure consisting SiO₄/AlO₄ tetrahedra which are linked by shared oxygen atoms to form a regular three-dimensional network. It is, however, preferred that the zeolite is a zeolite wherein the ratio Si:Al in the zeolite is more than 2.5, even more preferred more than 10 and most preferred more than 25. In particularly preferred, the zeolite used in the method of the present invention is ZSM-5, Y, BETA or mordinite type zeolites.

The metal precursor compound in the mixture used in the method according to the invention is any kind of metal compound which may be used in solid-state reactions in order to obtain a metal-doped zeolite. The metal precursor compound may be an organic or inorganic salt of the metal, or any kind of suitable metal-ligand coordination compound. It is, however, more preferred, that the metal precursor compound is an inorganic metal salt, such as a nitrate, sulphate, sulfide, hydroxide, nitride, chloride etc.

The metal in the metal precursor compound is preferably selected from the group consisting of Cu, Co, Pd., Rh, Ir, Ru, Fe, Ni and V.

It is furthermore preferred that the mixture of zeolite and metal precursor compound contains the metal precursor compound in an amount in the range of from 0.5 to 10 wt.-%, more preferably 2 to 8 wt.-% and most preferred between 6 and 7 wt.-% relative to the total weight of the mixture.

The mixture of zeolite and metal precursor compound is preferably a mixture which is essential dry. Under the term "essentially dry" it is meant that the water content of the mixture is reduced to an unavoidable content, for instance due to the presence of water in metal salt hydrates.

The present invention further refers to a metal-doped zeolite that is obtainable by the method according to the invention. Since the metal-doped zeolite obtainable by the method according to the invention may not be distinguished from metal-doped zeolites according to the state of the art by known measurement methods, but only by its higher activity, it is justified to characterize the metal-doped zeolite by means of its production process.

The metal in the metal doped zeolite according to the invention is preferably present in cationic form at the extra frame position.

The amount of metal in the metal-doped zeolite according to the invention lies in the range of from ... to ... wt.-% relative to the total weight of the metal-doped zeolite in its dry state.

The present invention further refers to the use of the metal-doped zeolite according to the invention for the conversion of nitrogen-containing compounds to nitrogen. In other words, the present invention further refers to a method of converting nitrogen-containing compounds to nitrogen by using a metal-doped zeolite according to the invention. This includes also a method for the conversion of nitrogen-containing compounds to nitrogen, wherein in a first step a metal-doped zeolite is produced according to the method of the invention which is then used to convert nitrogen-containing compounds to nitrogen.

Under the term "conversion of nitrogen-containing compounds to nitrogen", it is either meant that nitrogen oxides (NO_{X}) are reduced to N₂, or that NH₃ is oxidized to N₂. Such catalytic methods are known in the art and every kind of reducing agent or oxidizing agent which is known by a person skilled in the art may be used for this conversion process.

The present invention further refers to the use of the metal-doped zeolite according to the invention or the metal-doped zeolite obtained by the method according to the invention for the production of a device used for exhaust gas treatment.

After the production of the metal-doped zeolite according to the invention, it is usually present in the form of a powder. In order to may use the metal-doped zeolite for the conversion of nitrogen-containing compounds to nitrogen the powders are preferably formed to full extrudates, preferably with the aid of oxidic and/or organic binders or are applied to ceramic or metallic support materials as a constituent of a washcoat which is then calcined to a coated catalyst.

The above-mentioned extrudates are preferably prepared by means of pressing the obtained metal-doped zeolite powder together with at least one oxidic and/or organic binder. The extrudate is preferably formed to an extrudate in honeycomb form. Amongst binders the mixture used to form an extrudate may further contain metal oxides, promoters, stabilizers and/or fillers. In such a mixture for forming an extrudate the metal-doped zeolite is preferably present in the amount of from 5 to 95 wt.-%, more preferably in the range of from 50 to 90 wt.-%, relative to the total amount of such a composition.

In case the metal-doped zeolite is present as a coating on a support material, a composition containing the metal-doped zeolite is preferably processed to a so-called washcoat which is suitable for coating support materials. Such a washcoat preferably comprises 5 to 90 wt.-%, more preferably 10 to 80 wt.-% and even more preferred 10 to 70 wt.-% of the metal-doped zeolite according to the present invention. Additionally, the above-mentioned washcoat contains preferably water or a solvent as binder.

The present invention is further illustrated by means of the following Figures and examples which should however not be understood as limiting the scope of the present invention.
- Figure 1:: Figure 1 shows a moving bed reactor which may be used in the method according to the invention. At the lower end of the moving bed reactor (1) it contains a feed opening (2) on the outer sidewall in front of which a screw conveyor (10) may be placed. As an agitator means the moving bed reactor preferably contains a paddle agitator (4) which extends from the longitudinal direction inside the moving bed reactor. The area depicted with the reference sign (5) is the so-called heating zone wherein the mixture applied to the feed opening is heated to the reaction temperature. In the area depicted with reference sign (6) the mixture is reacted to the desired product and is called reaction zone (6). On the outer wall of the moving bed reactor a heating means (7) is placed which is able to adjust the desired reaction temperature. At the upper end of the moving bed reactor an opening is placed which is called the discharge opening (3), from where the desired product is discharged from the moving bed reactor. The hopper (8) may feed the mixture of zeolite and metal precursor compound to the screw conveyor. The hopper (9) may serve as a collecting container for the desired product discharged from the discharge opening (3).

### Examples

A conventional ball mill was used in order to grind the mixture of zeolite and metal precursor compound. A vertical moving bed reactor according to Figure 1 was used in order to accomplish the reaction of zeolite and metal precursor compound.

### Example 1: Preparation of a metal-doped catalyst

10 kg ammonium ZSM-5 with a SiO₂/Al₂O₃ ratio of 25 was mixed in a ball mill with 1.2 kg FeCl₂*4 H₂O (supplied by Merck, Darmstadt) (calculated 5 wt.-% Fe₂O₃) for one hour in a ball mill at room temperature. The average particle size of the mixture was about 10 µm. The mixture was fed at a rate of 2 kg/h with a total retention time between 4 and 5 hours. The mixture was heated to a temperature of 500 to 520 °C in the heating zone of the reactor, then transported to the reaction zone where the temperature maintained between 500 and 520°C. The iron-doped zeolite was washed with water and dried.

### Example 2: Preparation of the metal-doped catalyst

12 kg ammonium ZSM-5 with an SiO₂/Al₂O₃ ratio of 25 was mixed in a ball mill with 1.5 kg FeCl₂*4 H₂O (supplied by Merck, Darmstadt) (calculated 5 wt.-% Fe₂O₃) for one hour in a ball mill at room temperature. The mixture was fed at a rate of 2 kg/h with a retention time between 2 and 3 hours. The mixture was heated to a temperature of 500 to 520 °C in the heating zone of the reactor, then transported to the reaction zone where the temperature maintained between 500 and 520°C. The iron-doped zeolite was washed with water and dried.

### Comparative Example 1:

500 g ammonium ZSM-5 with an SiO₂/Al₂O₃ ratio of 25 was mixed in a ball mill with 60 g FeCl₂*4 H₂O (supplied by Merck, Darmstadt) (calculated 5 wt.-% Fe₂O₃) for one hour at room temperature. A deep bed consisting of the mixture 10 cm high was then placed in a calcining furnace.

The calcining furnace was then heated from room temperature to 500°C. The temperature of 500°C was maintained for 5 hours and then the calcining furnace was cooled to room temperature and the iron-doped zeolite washed with water and dried.

### Example 3: Performance Tests

The catalytic activities in the conversion of N₂O into N₂ of the catalysts according to the invention prepared in Examples 1 and 2 and Comparative Example 1 was determined. The test was carried out at 360°C and a GHSV (gas hourly space velocity) of 10,000 h⁻¹ and with a CH₄/N₂O ratio of 0.25.

**Table 1.**

| Catalyst prepared according to | Example 1 | Example 2 | Comparative Example 1 |
|---|---|---|---|
| Conversion of N₂O | 91,1% | 92,7% | 88,5% |

The results in Table 1 show that the activity of the catalysts according to the invention is increased for at least 2,6 percentage points compared to a metal doped zeolite which is produced by means of a deep bed.

## Claims

1. A method of producing a metal-doped zeolite, wherein a mixture of a zeolite and a metal precursor compound is reacted in a moving bed reactor (1) comprising a feed opening (2), a heating zone (5), a reaction zone (6) and a discharge opening (3).

2. The method according to claim 1, wherein the mixture is fed to the moving bed reactor (1) through the feed opening (2).

3. The method according to claim 2, wherein the mixture is transported from the feed opening (2) to the heating zone (5).

4. The method according to claim 3, wherein the mixture is heated in the heating zone (5) to a temperature in the range of from 300°C to 800°C.

5. The method according to claim 3 or 4, wherein the mixture is transported from the heating zone (5) to the reaction zone (6).

6. The method according to claim 5, wherein the temperature in the reaction zone (6) is in the range of from 300°C to 800°C.

7. The method according to claim 5 or 6, wherein the retention time of the mixture in the reaction zone (6) is in the range of from 50 min to 8 hrs.

8. The method according to claims 6 or 7, wherein the metal-doped zeolite obtained in the reaction zone (6) is discharged from the discharge opening (3).

9. The method according to any one of claims 1 to 7, wherein the metal-doped zeolite is produced in a continuous flow.

10. The method according to any one of claims 1 to 9, wherein the total retention time of the mixture/metal-doped zeolite in the moving bed reactor is in the range of from 1 hr to 36 hrs.

11. The method according to any one of claims 1 to 10, wherein the ratio Si:Al in the zeolite is more than 2.5.

12. The method according to any one of claims 1 to 11, wherein the metal in the metal precursor compound is selected from the group consisting of Cu, Co, Pd, Rh, Ir, Ru, Fe, Ni and V.

13. The method according to any one of claims 1 to 12, wherein the mixture contains the metal precursor compound in an amount in the range of from 0.5 to 10 wt.-% relative to the total weight of the mixture.

14. A metal-doped zeolite obtainable by the method according to any one of claims 1 to 13.

15. Use of a metal-doped zeolite according to claim 14 for the conversion of nitrogen-containing compounds to nitrogen.
